# EUROPEAN PATENT SPECIFICATION

(11) **EP 3 865 360 B1**
(45) Date of publication and mention of the grant of the patent: **06.08.2025**
(21) Application number: 19876145.4
(22) Date of filing: 28.06.2019
(51) Int. Cl.: B60W 30/06, G05D 1/00, B62D 15/02

(54) **PARKING CONTROL METHOD AND APPARATUS, AND VEHICLE**
VERFAHREN UND VORRICHTUNG ZUR PARKSTEUERUNG SOWIE FAHRZEUG
PROCÉDÉ ET APPAREIL DE COMMANDE DE STATIONNEMENT, ET VÉHICULE

(30) Priority: 24.10.2018 CN 201811244526
(43) Date of publication of application: 18.08.2021
(73) Proprietor: Guangzhou Xiaopeng Motors Technology Co., Ltd., Guangzhou, Guangdong 510000 (CN)
(72) Inventor: CHEN, Liqiang, Guangdong 510000 (CN)
(74) Representative: Habermann, Hruschka & Schnabel
(86) International application number: PCT/CN2019/093424
(87) International publication number: WO 2020/082771

(56) References cited:
- CN-A- 102 069 799
- CN-A- 103 718 223
- CN-A- 104 691 544
- CN-A- 109 398 351
- CN-U- 202 879 483
- CN-U- 203 255 183
- CN-U- 203 255 183
- JP-A1- WO2017 168 754
- KR-A- 20070 077 186
- KR-A- 20140 142 993
- US-A1- 2018 105 165
- US-A1- 2018 118 163

## Description

### TECHNICAL FIELD

The present disclosure relates to the field of vehicle control technologies, and more particularly, to a parking control method and apparatus, and a vehicle.

### BACKGROUND

With accelerated integration of electronics, information, communication and other technologies with the automobile industry, automobiles are also developing towardsatrend of intelligence and networking. With the development of automobiles, many automobiles can realize automatic parking. However, in terms of automatic parking on the market, after an automobile identifies a parking space, full-automatic parking can be completed using an automobile key, without manual intervention. A driver can choose to get off the automobile in advance, which saves parking time. However, convenience brought by automatic parking may also be accompanied by some safety issues.

US 2018/0105165 A1 discloses methods and systems for automatically controlling a vehicle. KR 2014 0142993 A discloses an apparatus and a method for assisting remote parking. US 2018/0118163 A1 discloses a vehicle control system and vehicle control device. US 2018/118163 A1 shows in particular a parking control method, applied in a vehicle, with the steps of: receiving a parking request transmitted by a control device in an one-way short-range wireless communication manner; establishing, after receiving the parking request, a short-range wireless communication connection with the control device; monitoring a current state of the established short-range wireless communication connection, in a process of performing a parking operation on the vehicle based on the parking request; and stopping performing the parking operation, when it is monitored that the current state of the established short-range wireless communication connection is disconnection

### SUMMARY

In view of the above, an object of embodiments of the present disclosure is to provide a parking control method and apparatus, and a vehicle.

In a first aspect, an embodiment of the present disclosure provides a parking control methodapplied in a vehicle. The method includes: receiving a parking request transmitted by a control device in a one-way short-range wireless communication manner of a first short-range wireless communication technology;establishing, after receiving the parking request, a short-range wireless communication connection of a second short-range wireless communication technology with the control device, the second short-range wireless communication technology being different from the first short-range wireless communication technology; monitoring a current state of the established short-range wireless communication connection, in a process of performing a parking operation on the vehicle based on the parking request; and stopping performing the parking operation, when it is monitored that the current state of the established short-range wireless communication connection is disconnection.

In at least one embodiment, the method further includes performing the parking operation until parking is completed, when it is monitored that the current state of the established short-range wireless communication connection is connection.

In at least one embodiment, said establishing, after receiving the parking request, the short-range wireless communication connection with the control device includes:transmitting, after receiving the parking request, a short-range wireless communication connection request to the control device; andestablishing, after receiving a connection response from the control device, the short-range wireless communication connection with the control device.

In at least one embodiment, said establishing after receiving the parking request, the short-range wireless communication connection with the control device includes establishing, by a first electronic control unit, the short-range wireless communication connection with the control device. Said monitoring the current state of the established short-range wireless communication connection includes:transmitting, by the first electronic control unit, the current state of the established short-range wireless communication connection between the first electronic control unit and the control device to a second electronic control unit based on a preset rule; andobtaining, by the second electronic control unit, a connection state of the established short-range wireless communication connection with the control device based on a received current state.

In at least one embodiment, the method further includestransmitting, when it is monitored that the current state of the established short-range wireless communication connection is the disconnection, a notification message indicating connection interruption to a designated communication account to notify a relevant user that parking is interrupted.

In at least one embodiment, the method further includestransmitting, after completion of parking, a notification message indicating parking completion to a designated communication account.

In at least one embodiment, the method further includestransmitting a current parking state to a server for the server to transmit the current parking state to a designated application account.

In at least one embodiment, the method further includes, prior to performing the parking operation on the vehicle based on the parking request, identifying a current environment where the vehicle is located, to determine whether there is a parking space meeting a condition in the current environment. When there is a parking space meeting the condition in the current environment, the parking operation is performed on the vehicle based on the parking request.

In a second aspect, an embodiment of the present disclosure further provides a parking control apparatusapplied in a vehicle. The apparatus includes: a receiving module configured to receive a parking request transmitted by a control device in a one-way short-range wireless communication manner of a first short-range wireless communication technology; an establishing module configured to establish, after receiving the parking request, a short-range wireless communication connection of a second short-range wireless communication technology with the control device, the second short-range wireless communication technology being different from the first short-range wireless communication technology; a monitoring module configured to monitor a current state of the established short-range wireless communication connection, in a process of performing a parking operation on the vehicle based on the parking request; and a control module configured to stop performing the parking operation, when it is monitored that the current state of the established short-range wireless communication connection is disconnection.

In a third aspect, an embodiment of the present disclosure further provides a vehicle. The vehicle includes a memory and an electronic control unit. The memory is configured to store a computer program. The electronic control unit is configured to read and run the computer program from the memory to perform the above method.

In order to make the above objects, features and advantages of the present disclosure more apparent and readily appreciated, detailed description is made below by citing the following embodiments described in combination with the accompanying drawings.

### BRIEF DESCRIPTION OF DRAWINGS

In order to clearly explain technical solutions of embodiments of the present disclosure, drawings used inembodiments are briefly described below. It should be understood that the drawings as described below merely illustrate some embodiments of the present disclosure, and thus should not be construed to limit the scope of the present disclosure.Based on these drawings, other related drawings can be obtained by those skilled in the art without creative effort.
FIG. 1 is a schematic diagram illustrating interaction between a vehicle and a control device according to an embodiment of the present disclosure.
FIG. 2 is a schematic diagram illustrating interaction between a vehicle and a control device according to another embodiment of the present disclosure.
FIG. 3 is a flowchart illustrating a parking control method according to an embodiment of the present disclosure.
FIG. 4 is a block diagram illustrating functional modules of a parking control apparatus according to an embodiment of the present disclosure.

### DESCRIPTION OF EMBODIMENTS

Technical solutions in embodiments of the present disclosure will be clearly and completely described below in combination with the accompanying drawings in the embodiments of the present disclosure. Obviously, the embodiments described here are merely part of the embodiments of the present disclosure and are not all embodiments of the present disclosure. Generally, components in the embodiments of the present disclosure described and illustrated in the drawings herein may be arranged and designed in various different configurations. Therefore, the following detailed description of the embodiments of the present disclosure provided in the accompanying drawings is not intended to limit the scope of the present disclosure, but merely represents selected embodiments of the present disclosure. Based on the embodiments of the present disclosure, other embodiments obtained by those skilled in the art without creative labor are within the scope of the present disclosure, which is defined by the appended claims.

It is to be noted that similar reference numerals and letters represent similar items in the following figures. Therefore, once an item is defined in one figure, the item does not need to be further defined and explained in subsequent figures. Also, in the description of the present disclosure, terms "first", "second", etc., are merely used for distinguishing and description, and cannot be understood as indicating or implying relative importance.

The popularization of vehicle automation has brought convenience to users' lives. However, there are also certain safety risks. That is, when a user is away from a vehicle by a certain distance, and there is an unidentifiable object, the vehicle, due to limitations of an ultrasonic radar, may collide with an undetectable obstacle, resulting in vehicle damage or casualties.

Therefore, the safety of automatic parking in the related art needs to be further improved. In order to solve this problem, the inventor of the present disclosure has conducted research on parking a vehicle by means of a two-way communication scheme. Detailed description will be given below through several embodiments.

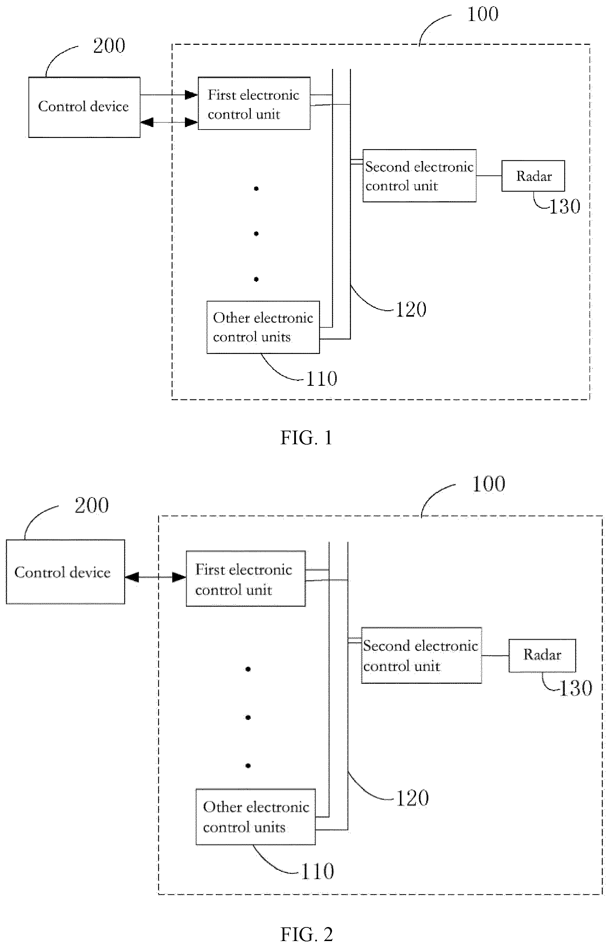

FIG. 1 is a schematic diagram illustrating interaction between a vehicle and a control device according to an embodiment of the present disclosure.As illustrated in FIG. 1, a vehicle 100 and a control device 200 are illustrated. The control device 200 may perform one-way communication with the vehicle 100 in a radio frequency manner, and may also perform two-way communication with the vehicle 100 in a short-range wireless communication manner. The control device 200 in this embodiment may be a vehicle key.

As illustrated in FIG. 1, the vehicle in an embodiment of the present disclosure includes a plurality of Electronic control units 110 (ECUs for short).

The plurality of ECUs communicates with each other through aController Area Network (CAN) bus 120.

The ECU may include a microprocessor (CPU), a memory (ROM,RAM), an Input/Output(I/O) interface, an Analog-to-Digital (A/D) converter, and a large-scale integrated circuitsuch as a shaping circuit and a driving circuit.

The memory may be, but is not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), etc. The memory is used to store a program. The microprocessor executes the program after receiving an execution instruction. Steps to be executed by the vehicle 100 defined ina processdisclosed in any embodiment of the present disclosure can be applied in the microprocessor, or implemented by the microprocessor.

The microprocessor may be an integrated circuit chip with signal processing capability.

Furthermore, the vehicle 100 may also include a radar 130. The radar 130 may include a front parking radar and a reversing radar.

The front parking radar may include a front controller, a sensor, and an indicator. The front parking radar applies the principle of ultrasonic ranging. The controller controls the sensor to emit an ultrasonic signal. When the ultrasonic signal encounteran obstacle, an echo signal is generated. After the sensor receives the echo signal, calculation is performed by the front controller, and processing and determination are performed. A display displaysa distance, an orientation, a region and other information of a nearest obstacle. A buzzer (or a horn) sends out a corresponding warning sound when appropriate.

The reversing radar may include an ultrasonic sensor, a rear controller, and a display or a buzzer. When reversing the vehicle, the reversing radar applies the principle of ultrasonics. Ultrasonic waves aretransmitted by the ultrasonic sensor mounted on a bumper at the rear of the vehicle. After hitting an obstacle, the ultrasonic sound waves are reflected. The rear controller calculates an actual distance between a body of the vehicle and the obstacle, and outputs a prompt message. The prompt message can be a text message displayed on the display, or a sound message output from the buzzer.

Each ECU on the vehicle is used to deal with a type of problem on the vehicle. For example, the vehicle may include a first ECUconfigured to respondto an instruction transmitted by the vehicle key. For another example, the vehicle may include a second ECU configured to execute an instructionrequired for a parking operation.

FIG. 2 is a schematic diagram illustrating interaction between a vehicle and a control device according to another embodiment of the present disclosure. The interactive environment diagram illustrated in FIG. 2 is similar to that illustrated in FIG. 1. A difference between the interactive environment diagrams illustrated in FIG. 2 and FIG. 1 is that the control device illustrated in FIG. 2 communicates with the vehicle in a two-way communication manner. The control device 200 in this embodiment may be a vehicle key, a tablet computer, a smart phone, aPersonal Digital Assistant (PDA), and the like.

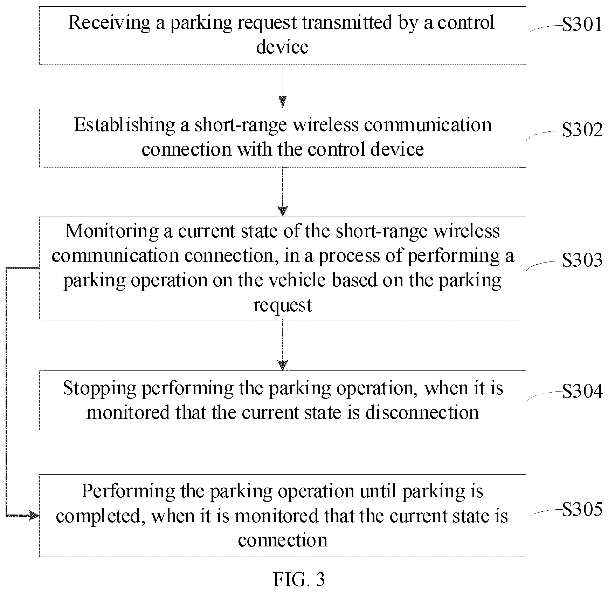

FIG. 3 is a flowchart illustrating a parking control method according to an embodiment of the present disclosure. The parking control method according to this embodiment is applied in a vehicle. A specific process illustrated in FIG. 3 will be described in detail below.

At block S301, a parking request transmitted by a control device is received.

In an embodiment, the control device may be a vehicle key, amobile terminal of the user, or other devices.

In an embodiment, a plurality of control buttons may be provided on the vehicle key. The plurality of control buttons include a parking button. When the parking button is pressed, the vehicle key transmits a parking request to the vehicle.

In another embodiment, an application for controlling the vehicle may be installed on the mobile terminal. When the application uses an account associated with a target vehicle to log in, the application can transmit some vehicle control requests to the target vehicle. A control interface of the application may include a button for controlling parking. After receiving a trigger operation on the button for controlling parking, the mobile terminal may transmit the parking request to the vehicle. Further, a main control interface of the aboveapplication may also include buttons for, for example, starting a wiper, opening a door, openinga window, and adjustingseat back.

In an embodiment, the control device may transmit the parking request to the vehicle in a one-way communication manner, and may also transmitthe parking request to the vehicle in a two-way short-range communication manner.

The one-way communication manner may be a radio frequency manner. The two-way short-range wireless communication manner can be Bluetooth technology, Wi-Fi technology, ZigBee technology, IrDA technology, NFC technology, and UWB technology.

At block S302, a short-range wireless communication connection with the control device is established.

The control device is a mobile device held by the user, and thusthe short-range wireless communication manner can ensure that a distance between the control device and the vehicle is within a limited range. Therefore, a distance between the user and the vehicle can be kept withinthelimited range, preventing the userfrom being away from the vehicle.

Further, steps in this embodiment are not limited to the sequence illustrated in FIG. 3. In some cases, sequences of individual steps can also be exchanged.

In an embodiment, if the parking request is transmitted in a two-way short-range wireless communication manner, step S302 may be performed before step S301.

In another embodiment, if the parking request is transmitted in a one-way short-range communication manner, step S301 is performed before step S302.

Specifically, step S302 includes:transmitting, after receiving the parking request, a short-range wireless communication connection request to the control device; andestablishing, after receiving a connection response from the control device, the short-range wireless communication connection with the control device.

At block S303, a current state of the short-range wireless communication connection is monitored, in a process of performing a parking operation on the vehicle based on the parking request.

In an embodiment, a current state of the short-range wireless communication connectionwith the control device can be obtained based on a preset rule. For example, the current state of the short-range wireless communication connection can be obtained in real time, or the current state of the short-range wireless communication connection can be obtained based on a preset frequency. The preset obtaining frequency can be once every 120 milliseconds, once every 80 milliseconds, or once every 45 milliseconds. Specifically, different rules can be selected based on different types of vehicles. In one example, if the vehicle is a truck that takes much time to park, a low preset frequency such as once every 80 millisecondscan be set.In another example, if the vehicle is a car that takes little time to park, a high preset frequency such as once every 40 milliseconds can be set.

By obtaining the current state of the short-range wireless communication connection with the control device in real time, it can be effectively determined at any time whether a distance to the control device is within the limited range. By setting an appropriate frequency adequate for identifying a connection state between the vehicle and the control device, the work loadon the ECUs of the vehicle can also be reduced.

Different functions for controlling the vehicle are implemented by different ECUs. Based ona structure of the abovevehicle, an ECUmay receive the parking request from the control device, and another ECUmay perform the parking operation.

In an embodiment, step S302 includesestablishing, by the first ECU, the short-range wireless communication connection with the control device.

Monitoring the current state of the short-range wireless communication connection includes:transmitting, by the first ECU, the current state of the short-range wireless communication connection between the first ECU and the control device to a second ECU based on a preset rule; andobtaining, by the second ECU, a connection state of the short-range wireless communication connection with the control device based on a received current state.

In an embodiment, the first ECU may transmit, based on a preset rule, a current state of the short-range wireless communication connection of the first ECU with the control device to the second ECU. For example, the current state of the short-range wireless communication connection can be transmitted in real time, or the current state of the short-range wireless communication connection can be transmitted based on a preset frequency. The preset obtaining frequency can be once every 120 milliseconds, once every 80 milliseconds, or once every 45 milliseconds. Specifically, different rules can be selected based on different types of vehicles. In one example, if the vehicle is a truck that takes much time to park, a low preset frequency such as once every 80 milliseconds can be set. In another example, if the vehicle is a car that takes little time to park, a high preset frequency such as once every 40 milliseconds can be set.

The first ECU according to this embodiment is configured to communicate with the control device and receive a vehicle control request transmitted by the control device. The second ECU is configured to control and manage a related device that needs to be used for parking, so as to realize effective parking. Specifically, the second ECU can activate the front parking radar and the reversing radar to detect a surrounding environment of the vehicle.

In an embodiment, the parking control method further includes, prior to performing the parking operation on the vehicle based on the parking request, identifying a current environment where the vehicle is located, to determine whether there is a parking space meeting a condition in the current environment. When there is a parking space meeting the condition in the current environment, the parking operation is performed on the vehicle based on the parking request.

Parking can be realized more accurately through identification of a parking space.

At block S304, when it is monitored that the current state is disconnection, the parking operation is stopped.

If the short-range wireless communication connection with the control device is the disconnection, it means that the user may be far away from the vehicle. Continuing parking may cause collision with some obstacles that the vehicle cannot identify. Therefore, the parking operation is interrupted.

When the user needs to use automatic parking, the distance between the user and the vehicle is ensured by using short-range wireless communication, thereby not only freeing the user'hands fromparking operations, but also improving the safety of the vehicle. Performing the parking operation only when the user is within a safe distancecan avoid a danger of excessive parking of the vehicle. By introducing a two-way communication mechanism, a corresponding state is transmitted to an intelligent driving module after the two-way communication is disconnected, thereby avoiding a potential riskthat may occur after the user leaves the car, and reducing a parking risk for the user.

At block S305, when it is monitored that the current state is connection, the parking operation is performed until parking is completed.

By maintaining the short-range wireless communication connection with the control device, the distance to the control device can be maintained well. Also, it can be determined whether the distance to the control device is within an effective distance range through the connection or the disconnection of the short-range wireless communications with the control device.

In order to facilitate the user to know the parking state even if the user is not around the vehicle, a step of transmitting a notification message to a relevant user can be added on a basis of FIG. 2.

The parking control method according to an embodiment may further includetransmitting, when it is monitored that the current state is the disconnection, a notification message indicating connection interruption to a designated communication account to notify a relevant user that parking is interrupted.

The parking control method according to an embodiment may further includetransmitting, after completion of parking, a notification message indicating parking completion to a designated communication account.

The above communication account may be a mobile phone number of the relevant user of the vehicle that is performing the parking operation, or may be other instant messaging accounts of the relevant user, such as DingTalk, WeChat, QQ, and the like.

Further, the display on the vehicle can receive operations from the user to realize binding and association with a communication account.

By transmitting a message to the communication account of the relevant user of the vehicle performing the parking operation, the user can be informed of the parking state in time, and thus the user can take measures based on the parking state to improve parking safety.

With the popularization of smart phones, various applications are also integrated into people's lives.For this consideration, in order to facilitate the user to manage the vehicle through an application, the vehicle can transmit the parking state to a server. The server pushes the parking state to the application, such that the application can display the parking state.

The parking control method according to an embodiment may further includetransmitting a current parking state to a server for the server to transmit the current parking state to a designated application account.

In an embodiment, a mobile terminal used by the user corresponding to the vehicle performing the parking operation may be installed with an application for managing the vehicle. The application can have a setting unit for receiving an associated vehicle set by the user. For example, association with the vehicle may be realized through information such as an identification number of the vehicle and a license plate number of the vehicle. Thedesignated application account may be an account for the application.

The following describes a whole parking process in a scene in detail.

When the vehicle identifies a parking space, the user presses the parking button on the vehicle key. Communication with the firstECU (ECU1) is performed through the radio frequency manner. After the ECU1 receives the parking request from the vehicle key, a Bluetooth module of the ECU1 initiates Bluetooth connection and pairing with the vehicle key. After the pairing is completed, the ECU1 transmitsa Bluetooth connection state to the second ECU (the intelligent driving ECU) through the CAN bus. The intelligent driving ECU can then control various devices required for parking to perform the parking operation. Through the above operations, after the user moves out of the preset range (the limited range that can maintain the Bluetooth connection), the Bluetooth module of the ECU1 is disconnected from the Bluetooth of the vehicle key, and the ECU1 transmitsadisconnection state to the intelligent driving ECU. The intelligent driving ECU stops control, and the parking system is suspended, thereby avoiding some security risks.

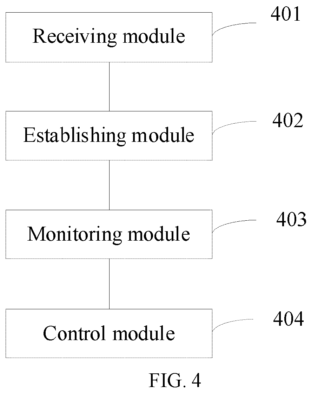

FIG. 4 is a block diagram illustrating functional modules of a parking control apparatus according to an embodiment of the present disclosure. Individual modules in the parking control apparatus according to this embodiment are used to execute steps in the above method embodiments. The parking control apparatus includes a receiving module 401, an establishing module 402, a monitoring module 403, and a control module 404.

The receiving module 401is configured to receive a parking request transmitted by a control device.

The establishing module 402 is configured to establish a short-range wireless communication connection with the control device.

The monitoring module 403 is configured to monitor a current state of the short-range wireless communication connection, in a process of performing a parking operation on the vehicle based on the parking request.

The control module 404 is configured to stop performing the parking operation, when it is monitored that the current state is disconnection.

The control module 404 is configured to performthe parking operation until parking is completed, when it is monitored that the current state is connection.

In an embodiment, the establishing module 402 is further configured totransmit, after receiving the parking request, a short-range wireless communication connection request to the control device; andestablish, after receiving a connection response from the control device, the short-range wireless communication connection with the control device.

In an embodiment, the establishing module 402 is further configured toestablish, by a first electronic control unit, the short-range wireless communication connection with the control device.

The monitoring module 403 is further configured totransmit, by the first electronic control unit, the current state of the short-range wireless communication connection between the first electronic control unit and the control device to a second electronic control unit based on a preset rule; andobtain, by the second electronic control unit, a connection state of the short-range wireless communication connection with the control device based on a received current state.

In an embodiment, the parking control apparatus further includes a first transmitting module. The first transmitting module is configured to transmit, when it is monitored that the current state is the disconnection, a notification message indicating connection interruption to a designated communication account to notify a relevant user that parking is interrupted.

In an embodiment, the first transmitting module is further configured to transmit, after completion of parking, a notification message indicating parking completion to a designated communication account.

In an embodiment, the apparatus further includes a second transmitting module. The second transmitting module is configured to transmita current parking state to a server for the server to transmit the current parking state to a designated application account.

In an embodiment, the apparatus further includes an identification module. The identification module is configured to, prior to performing the parking operation on the vehicle based on the parking request, identifya current environment where the vehicle is located, to determine whether there is a parking space meeting a condition in the current environment. When there is a parking space meeting the condition in the current environment, the parking operation is performed on the vehicle based on the parking request.

For other details of this embodiment, reference may be made to the description of the above method embodiments, and details thereof will be omitted here.

With the parking control apparatus according to an embodiment of the present disclosure, the current state of the short-range wireless communication connection is monitored, in the process of performing the parking operation on the vehicle based on the parking request. Only when the current state is disconnection, the parking operation is stopped, thereby avoiding some safety problems in a parking process caused by excessive parking.

It should be understood that the method and the apparatus disclosed in several embodiments provided by the present disclosure can also be realized in other manners. The apparatus embodiments described above are merely exemplary. For example, the flowcharts and block diagrams in the figures show architectures, functions, and operations of possible implementations of the method, the apparatus, and the computer program productaccording to several embodiments of the present disclosure. In this regard, each block in the flowchart or block diagram can represent a module, a program segment, or a part of code. The module, the program segment or the part of the code includes one or more executable instructions for realizing a specified logic function. It is also to be noted that in some alternative implementations, functions marked in blocks may also occur in a different sequence from that marked in the figures. For example, two consecutive blocks can actually be executed substantially in parallel, or can sometimes be executed in a reverse order, depending on functions involved. It is also to be noted that each block in a block diagram and/or flowchart, and a combination of blocks in the block diagram and/or flowchart can be implemented by a dedicated hardware-based system that performs specified functions or actions, or can be implemented by a combination of dedicated hardware and computer instructions.

In addition, individual functional modules in the embodiments of the present disclosure can be integrated into a single part, or can be present as separate modules. It is also possible that two or more modules are integrated into a single part.

If the functions are realized in the form of functional software modules and are sold or used as an independent product, they can be stored in a storage mediumreadable by a computer. Based on this understanding, the technical solutions of the present disclosure in essence(that is, a part of the technical solutions that contributes to the related art) or parts of the technical solutions of the present disclosure can be embodied in a form of a software product. The software product is stored in a storage medium, and includes several instructions used for causing a computer device (for example, a personal computer, a server or a network device, etc.) to execute all or part of operations in the apparatus described in individual embodiments of the present disclosure. The above storage medium may be any medium capable of storing program codes, including a USB flash disk, a mobile hard disk, a Read-Only Memory (ROM), a Random Access Memory (RAM), a floppy disc, or an optical disc. It is to be noted that in the present disclosure, relational terms such as first and second are only used to distinguish one entity or operation from another entity or operation, and do not necessarily require or imply that entities or operations have any such actual relationship or order. In addition, terms "include", "comprise" or any other variations thereof are intended to cover a non-exclusive inclusion, such that a process, an apparatus, an article, or a device that includes a series of elements includes not only those elements, but also other elements that are not explicitly listed or inherent to the process, the apparatus, the article, or the device. Without more restrictions, an element defined by an expression "including a..." does not exclude an existence of other identical elements in the process, the apparatus, the article, or the device that includes the elements.

The above description illustrates only preferred embodiments of the present disclosure, and is not used to limit the present disclosure. For those skilled in the art, the present disclosure can have various modifications and changes. It is to be noted that similar reference numerals and letters indicate similar items in the following figures. Therefore, once a certain item is defined in one figure, the item does not need to be further defined and explained in subsequent figures.

The above description illustrates only specific embodiments of the present disclosure, but the protection scope of the present disclosure is not limited thereto. Changes or replacements that are conceivable to any person skilled in the art within the technical scope disclosed by the present disclosure shall fall into the protection scope of the present disclosure. Therefore, the protection scope of the present disclosure should be subject to the protection scope of the attached claims.

## Claims

1. A parking control method, applied in a vehicle (100), the method **characterized by**:
receiving (S301) a parking request transmitted by a control device (200) in a one-way short-range wireless communication manner of a first short-range wireless communication technology;
establishing (S302), after receiving the parking request, a short-range wireless communication connection of a second short-range wireless communication technology with the control device (200), wherein the second short-range wireless communication technology is different from the first short-range wireless communication technology;
monitoring (S303) a current state of the established short-range wireless communication connection, in a process of performing a parking operation on the vehicle (100) based on the parking request; and
stopping (S304) performing the parking operation, when it is monitored that the current state of the established short-range wireless communication connection is disconnection.

2. The parking control method according to claim 1, further comprising:
performing (S305) the parking operation until parking is completed, when it is monitored that the current state of the established short-range wireless communication connection is connection.

3. The parking control method according to claim 1, wherein said establishing (S302), after receiving the parking request, the short-range wireless communication connection with the control device (200) comprises:
transmitting, after receiving the parking request, a short-range wireless communication connection request to the control device (200); and
establishing, after receiving a connection response from the control device (200), the short-range wireless communication connection with the control device (200).

4. The parking control method according to claim 1, wherein said establishing (S302), after receiving the parking request, the short-range wireless communication connection with the control device (200) comprises:
establishing, by a first electronic control unit, the short-range wireless communication connection with the control device (200), and
said monitoring (S303) the current state of the established short-range wireless communication connection comprises:
transmitting, by the first electronic control unit, the current state of the established short-range wireless communication connection between the first electronic control unit and the control device (200) to a second electronic control unit based on a preset rule; and
obtaining, by the second electronic control unit, a connection state of the established short-range wireless communication connection with the control device (200) based on a received current state.

5. The parking control method according to claim 1, further comprising:
transmitting, when it is monitored that the current state of the established short-range wireless communication connection is the disconnection, a notification message indicating connection interruption to a designated communication account to notify a relevant user that parking is interrupted.

6. The parking control method according to claim 1, further comprising:
transmitting, after completion of parking, a notification message indicating parking completion to a designated communication account.

7. The parking control method according to claim 1, further comprising:
transmitting a current parking state to a server for the server to transmit the current parking state to a designated application account.

8. The parking control method according to any one of claims 1 to 7, further comprising, prior to performing the parking operation on the vehicle (100) based on the parking request:
identifying a current environment where the vehicle (100) is located, to determine whether there is a parking space meeting a condition in the current environment,
wherein when there is a parking space meeting the condition in the current environment, the parking operation is performed on the vehicle (100) based on the parking request.

9. A parking control apparatus, applied in a vehicle (100), the apparatus **characterized by**:
a receiving module (401) configured to receive a parking request transmitted by a control device (200) in a one-way short-range wireless communication manner of a first short-range wireless communication technology;
an establishing module (402) configured to establish, after receiving the parking request, a short-range wireless communication connection of a second short-range wireless communication technology with the control device (200), wherein the second short-range wireless communication technology is different from the first short-range wireless communication technology;
a monitoring module (403) configured to monitor a current state of the established short-range wireless communication connection, in a process of performing a parking operation on the vehicle (100) based on the parking request; and
a control module (404) configured to stop performing the parking operation, when it is monitored that the current state of the established short-range wireless communication connection is disconnection.

10. The parking control apparatus according to claim 9, wherein the control module (404) is configured to perform the parking operation until parking is completed, when it is monitored that the current state of the established short-range wireless communication connection is connection.

11. The parking control apparatus according to claim 9, wherein the establishing module (402) is configured to:
transmit, after receiving the parking request, a short-range wireless communication connection request to the control device (200); and
establish, after receiving a connection response from the control device (200), the short-range wireless communication connection with the control device (200).

12. The parking control apparatus according to claim 9, wherein the establishing module (402) is configured to:
establish, by a first electronic control unit, the short-range wireless communication connection with the control device (200), and
the monitoring module (403) is configured to:
transmit, by the first electronic control unit, the current state of the established short-range wireless communication connection between the first electronic control unit and the control device (200) to a second electronic control unit based on a preset rule; and
obtain, by the second electronic control unit, a connection state of the established short-range wireless communication connection with the control device (200) based on a received current state.

13. The parking control apparatus according to claim 9, further comprising:
a first transmitting module configured to transmit, when it is monitored that the current state of the established short-range wireless communication connection is the disconnection, a notification message indicating connection interruption to a designated communication account to notify a relevant user that parking is interrupted.

14. A vehicle (100), comprising a memory and an electronic control unit, wherein the memory is configured to store a computer program, and the electronic control unit is configured to read and run the computer program from the memory to perform the method according to any one of claims 1 to 8.

15. A computer-readable storage medium having stored thereon instructions that, when executed by a computer, cause the computer to perform the method of any one of claims 1 to 8.

## Patentansprüche

1. Verfahren zur Parksteuerung, das in einem Fahrzeug (100) angewendet wird, wobei das Verfahren **gekennzeichnet ist durch**:
Empfangen (S301) einer Parkanforderung, die von einem Steuergerät (200) in einer einseitigen drahtlosen Kurzstrecken-Kommunikationsweise einer ersten drahtlosen Kommunikationstechnologie mit kurzer Reichweite übertragen wird;
Aufbauen (S302) einer drahtlosen Kurzstrecken-Kommunikationsverbindung einer zweiten drahtlosen Kommunikationstechnologie mit kurzer Reichweite mit dem Steuergerät (200) nach Empfang der Parkanforderung, wobei sich die zweite drahtlose Kommunikationstechnologie mit kurzer Reichweite von der ersten drahtlosen Kommunikationstechnologie mit kurzer Reichweite unterscheidet;
Überwachen (S303) eines aktuellen Zustands der aufgebauten drahtlosen Kurzstrecken-Kommunikationsverbindung in einem Prozess des Durchführens eines Parkvorgangs an dem Fahrzeug (100) basierend auf der Parkanforderung; und
Beenden (S304) der Durchführung des Parkvorgangs, wenn festgestellt wird, dass der aktuelle Zustand der aufgebauten drahtlosen Kurzstrecken-Kommunikationsverbindung eine Unterbrechung ist.

2. Verfahren zur Parksteuerung nach Anspruch 1, des Weiteren aufweisend:
Durchführen (S305) des Parkvorgangs, bis das Parken abgeschlossen ist, wenn überwacht wird, dass der aktuelle Zustand der aufgebauten drahtlosen Kurzstrecken-Kommunikationsverbindung eine Verbindung ist.

3. Verfahren zur Parksteuerung nach Anspruch 1, bei dem das Aufbauen (S302) der drahtlosen Kurzstrecken-Kommunikationsverbindung mit dem Steuergerät (200) nach dem Empfang der Parkanforderung aufweist:
Übertragen einer drahtlosen Kurzstrecken-Kommunikationsverbindungs-Anforderung an das Steuergerät (200), nachdem die Parkanforderung empfangen wurde; und
Aufbauen der drahtlosen Kurzstrecken-Kommunikationsverbindung mit dem Steuergerät (200) nach dem Empfang einer Verbindungsantwort von dem Steuergerät (200).

4. Verfahren zur Parksteuerung nach Anspruch 1, bei dem das Aufbauen (S302) der drahtlosen Kurzstrecken-Kommunikationsverbindung mit dem Steuergerät (200) nach Empfang der Parkanforderung aufweist:
Aufbauen der drahtlosen Kurzstrecken-Kommunikationsverbindung mit dem Steuergerät (200) durch eine erste elektronische Steuereinheit, und
wobei das Überwachen (S303) des aktuellen Zustands der aufgebauten drahtlosen Kurzstrecken-Kommunikationsverbindung aufweist:
Übertragen des aktuellen Zustands der aufgebauten Kurzstrecken-Kommunikationsverbindung zwischen der ersten elektronischen Steuereinheit und dem Steuergerät (200) durch die erste elektronische Steuereinheit an eine zweite elektronische Steuereinheit basierend auf einer voreingestellten Regel; und
Erhalten eines Verbindungszustands der aufgebauten drahtlosen Kurzstrecken-Kommunikationsverbindung mit dem Steuergerät (200) durch die zweite elektronische Steuereinheit auf der Grundlage eines empfangenen aktuellen Zustands.

5. Verfahren zur Parksteuerung nach Anspruch 1, des Weiteren aufweisend:
Übertragen, wenn überwacht wird, dass der aktuelle Zustand der aufgebauten drahtlosen Kurzstrecken-Kommunikationsverbindung die Unterbrechung ist, einer Benachrichtigungsnachricht, die die Verbindungsunterbrechung anzeigt, an ein bestimmtes Kommunikationskonto, um einen relevanten Benutzer zu benachrichtigen, dass das Parken unterbrochen ist.

6. Verfahren zur Parksteuerung nach Anspruch 1, des Weiteren aufweisend:
Übertragen, nach Abschluss des Parkens, einer Benachrichtigung über den Abschluss des Parkens an ein bestimmtes Kommunikationskonto.

7. Verfahren zur Parksteuerung nach Anspruch 1, des Weiteren aufweisend:
Übertragen eines aktuellen Parkzustands an einen Server, damit der Server den aktuellen Parkzustand an ein bestimmtes Anwendungskonto überträgt.

8. Verfahren zur Parksteuerung nach einem der Ansprüche 1 bis 7, des Weiteren aufweisend, vor der Durchführung des Parkvorgangs am Fahrzeug (100) auf der Grundlage der Parkanforderung:
Identifizieren einer aktuellen Umgebung, in der sich das Fahrzeug (100) befindet, um festzustellen, ob es in der aktuellen Umgebung einen Parkplatz gibt, der eine Bedingung erfüllt,
wobei, wenn es einen Parkplatz gibt, der die Bedingung in der aktuellen Umgebung erfüllt, der Parkvorgang an dem Fahrzeug (100) auf der Grundlage der Parkanforderung durchgeführt wird.

9. Vorrichtung zur Parksteuerung, die in einem Fahrzeug (100) verwendet wird, wobei die Vorrichtung **gekennzeichnet ist durch**:
ein Empfangsmodul (401), das so konfiguriert ist, dass es eine Parkanforderung empfängt, die von einem Steuergerät (200) in einer einseitigen drahtlosen Kurzstrecken-Kommunikationsweise einer ersten drahtlosen Kommunikationstechnologie mit kurzer Reichweite übertragen wird;
ein Aufbaumodul (402), das so konfiguriert ist, dass es nach dem Empfang der Parkanforderung eine drahtlose Kurzstrecken-Kommunikationsverbindung einer zweiten drahtlosen Kommunikationsverbindung mit kurzer Reichweite mit dem Steuergerät (200) aufbaut, wobei sich die zweite drahtlose Kommunikationstechnologie mit kurzer Reichweite von der ersten drahtlosen Kommunikationstechnologie mit kurzer Reichweite unterscheidet;
ein Überwachungsmodul (403), das so konfiguriert ist, dass es einen aktuellen Zustand der aufgebauten drahtlosen Kurzstrecken-Kommunikationsverbindung in einem Prozess der Durchführung eines Parkvorgangs an dem Fahrzeug (100) auf der Grundlage der Parkanforderung überwacht; und
ein Steuermodul (404), das so konfiguriert ist, dass es die Durchführung des Parkvorgangs stoppt, wenn überwacht wird, dass der aktuelle Zustand der aufgebauten drahtlosen Kurzstrecken-Kommunikationsverbindung eine Unterbrechung ist.

10. Vorrichtung zur Parksteuerung nach Anspruch 9, bei der das Steuermodul (404) so konfiguriert ist, dass es den Parkvorgang durchführt, bis das Parken abgeschlossen ist, wenn überwacht wird, dass der aktuelle Zustand der aufgebauten drahtlosen Kurzstrecken-Kommunikationsverbindung eine Verbindung ist.

11. Vorrichtung zur Parksteuerung nach Anspruch 9, bei der das Aufbaumodul (402) so konfiguriert ist, dass es:
nach dem Empfang der Parkanforderung eine drahtlose Kurzstrecken-Kommunikationsverbindungs-Anforderung an das Steuergerät (200) überträgt; und
nach dem Empfang einer Verbindungsantwort von dem Steuergerät (200) die drahtlose Kurzstrecken-Kommunikationsverbindung mit dem Steuergerät (200) aufbaut.

12. Vorrichtung zur Parksteuerung nach Anspruch 9, bei der das Aufbaumodul (402) so konfiguriert ist, dass es:
durch eine erste elektronische Steuereinheit die drahtlose Kurzstrecken-Kommunikationsverbindung mit dem Steuergerät (200) aufbaut, und
das Überwachungsmodul (403) so konfiguriert ist, dass es:
den aktuellen Zustand der aufgebauten drahtlosen Kurzstrecken-Kommunikationsverbindung zwischen der ersten elektronischen Steuereinheit und dem Steuergerät (200) durch die erste elektronische Steuereinheit an eine zweite elektronische Steuereinheit basierend auf einer voreingestellten Regel überträgt; und
durch die zweite elektronische Steuereinheit einen Verbindungszustand der aufgebauten drahtlosen Kurzstrecken-Kommunikationsverbindung mit dem Steuergerät (200) basierend auf einem empfangenen aktuellen Zustand erhält.

13. Vorrichtung zur Parksteuerung nach Anspruch 9, des Weiteren aufweisend:
ein erstes Übertragungsmodul, das so konfiguriert ist, dass es, wenn überwacht wird, dass der aktuelle Zustand der aufgebauten drahtlosen Kurzstrecken-Kommunikationsverbindung die Unterbrechung ist, eine Benachrichtigungsnachricht, die die Verbindungsunterbrechung anzeigt, an ein bestimmtes Kommunikationskonto sendet, um einen relevanten Benutzer darüber zu informieren, dass das Parken unterbrochen ist.

14. Fahrzeug (100), das einen Speicher und eine elektronische Steuereinheit aufweist, wobei der Speicher so konfiguriert ist, dass er ein Computerprogramm speichert, und die elektronische Steuereinheit so konfiguriert ist, dass sie das Computerprogramm aus dem Speicher liest und ausführt, um das Verfahren nach einem der Ansprüche 1 bis 8 durchzuführen.

15. Computerlesbares Speichermedium, auf dem Anweisungen gespeichert sind, die, wenn sie von einem Computer ausgeführt werden, den Computer veranlassen, das Verfahren nach einem der Ansprüche 1 bis 8 durchzuführen.

## Revendications

1. Procédé de commande de stationnement appliqué à un véhicule (100), le procédé étant **caractérisé par**:
recevoir (S301) d'une demande de stationnement transmise par un dispositif de commande (200) dans un mode de communication sans fil unilatéral à courte portée d'une première technologie de communication sans fil à courte portée;
établir (S302) d'une liaison de communication sans fil à courte portée d'une seconde technologie de communication sans fil à courte portée avec le dispositif de commande (200) après réception de la demande de stationnement, la seconde technologie de communication sans fil à courte portée étant différente de la première technologie de communication sans fil à courte portée;
surveiller (S303) un état actuel de la liaison de communication sans fil à courte portée établie dans un processus d'exécution d'une opération de stationnement sur le véhicule (100) sur la base de la demande de stationnement; et
arrêter (S304) de l'exécution de l'opération de stationnement lorsqu'il est déterminé que l'état actuel de la liaison de communication sans fil à courte portée établie est une interruption.

2. Procédé de commande de stationnement selon la revendication 1, comprenant en outre:
effectuer (S305) l'opération de stationnement jusqu'à ce que le stationnement soit terminé lorsqu'il est surveillé que l'état actuel de la liaison de communication sans fil à courte portée établie est une connexion.

3. Procédé de commande de stationnement selon la revendication 1, dans lequel établissement (S302) de la liaison de communication sans fil à courte portée avec le dispositif de commande (200) après la réception de la demande de stationnement comprend:
transmettre une demande de connexion de communication sans fil à courte portée au dispositif de commande (200) après que la demande de stationnement a été reçue; et
établir la liaison de communication sans fil à courte portée avec le dispositif de commande (200) après la réception d'une réponse de liaison du dispositif de commande (200).

4. Procédé de commande de stationnement selon la revendication 1, dans lequel l'établissement (S302) de la liaison de communication sans fil à courte portée avec le dispositif de commande (200) après la réception de la demande de stationnement comprend:
établir de la liaison de communication sans fil à courte portée avec le dispositif de commande (200) par une première unité de commande électronique, et
dans lequel la surveillance (S303) l'état actuel de la liaison de communication sans fil à courte portée établie comprend:
transmettre par la première unité de commande électronique à une seconde unité de commande électronique de l'état actuel de la liaison de communication à courte portée établie entre la première unité de commande électronique et le dispositif de commande (200) sur la base d'une règle préétablie; et
obtenir par la seconde unité de commande électronique d'un état de connexion de la liaison de communication sans fil à courte portée établie avec le dispositif de commande (200) sur la base d'un état actuel reçu.

5. Procédé de commande de stationnement selon la revendication 1, comprenant en outre:
transmettre, lorsqu'il est surveillé que l'état actuel de la liaison de communication sans fil à courte portée établie est l'interruption, un message de notification indiquant l'interruption de la liaison à un compte de communication spécifique pour notifier à un utilisateur concerné que le stationnement est interrompu.

6. Procédé de commande de stationnement selon la revendication 1, comprenant en outre:
transmettre, une fois le stationnement terminé, une notification de la fin du stationnement à un compte de communication spécifique.

7. Procédé de commande de stationnement selon la revendication 1, comprenant en outre:
transmettre un état de stationnement actuel à un serveur afin que le serveur transmette l'état de stationnement actuel à un compte d'application spécifique.

8. Procédé de commande de stationnement selon l'une quelconque des revendications 1 à 7, comprenant en outre, avant l'exécution de l'opération de stationnement sur le véhicule (100) sur la base de la demande de stationnement:
identifier un environnement actuel dans lequel se trouve le véhicule (100) afin de déterminer s'il existe une place de stationnement dans l'environnement actuel qui satisfait à une condition,
dans lequel, s'il existe une place de stationnement qui satisfait à la condition dans l'environnement actuel, l'opération de stationnement sur le véhicule (100) est effectuée sur la base de la demande de stationnement.

9. Appareil de commande de stationnement, utilisé dans un véhicule (100), l'appareil étant **caractérisé par**:
un module de réception (401) configuré pour recevoir une demande de stationnement transmise par un dispositif de commande (200) dans un mode de communication sans fil unilatéral à courte portée d'une première technologie de communication sans fil à courte portée;
un module d'établissement (402) configuré pour établir une liaison de communication sans fil à courte portée d'une seconde liaison de communication sans fil à courte portée avec le dispositif de commande (200) lors de la réception de la demande de stationnement, la seconde technologie de communication sans fil à courte portée étant différente de la première technologie de communication sans fil à courte portée;
un module de surveillance (403) configuré pour surveiller un état actuel de la liaison de communication sans fil à courte portée établie dans un processus d'exécution d'une opération de stationnement sur le véhicule (100) sur la base de la demande de stationnement; et
un module de commande (404) configuré pour arrêter l'exécution de l'opération de stationnement lorsqu'il est déterminé que l'état actuel de la liaison de communication sans fil à courte portée établie est une interruption.

10. Appareil de commande de stationnement selon la revendication 9, dans lequel le module de commande (404) est configuré pour effectuer l'opération de stationnement jusqu'à ce que le stationnement soit terminé, lorsqu'il est surveillé que l'état actuel de la liaison de communication sans fil à courte portée établie est une connexion.

11. Appareil de commande de stationnement selon la revendication 9, dans lequel le module d'établissement (402) est configuré pour:
après avoir reçu la demande de stationnement, transmettre une demande de liaison de communication sans fil à courte portée au dispositif de commande (200); et
après avoir reçu une réponse de connexion du dispositif de commande (200), établir la liaison de communication sans fil à courte portée avec le dispositif de commande (200).

12. Appareil de commande de stationnement selon la revendication 9, dans lequel le module d'établissement (402) est configuré pour:
établir la liaison de communication sans fil à courte portée avec le dispositif de commande (200) par une première unité de commande électronique, et
le module de surveillance (403) est configuré pour:
transmettre l'état actuel de la liaison de communication sans fil à courte portée établie entre la première unité de commande électronique et le dispositif de commande (200) par l'intermédiaire de la première unité de commande électronique à une seconde unité de commande électronique sur la base d'une règle préétablie; et
par la seconde unité de commande électronique, obtenir un état de connexion de la liaison de communication sans fil à courte portée établie avec le dispositif de commande (200) sur la base d'un état actuel reçu.

13. Appareil de commande de stationnement selon la revendication 9, comprenant en outre:
un premier module de transmission configuré pour, lorsqu'il est surveillé que l'état actuel de la liaison de communication sans fil à courte portée établie est l'interruption, transmettre un message de notification indiquant l'interruption de la liaison à un compte de communication spécifique afin d'informer un utilisateur pertinent que le stationnement est interrompu.

14. Véhicule (100) comprenant une mémoire et une unité de commande électronique, la mémoire étant configurée pour stocker un programme d'ordinateur, et l'unité de commande électronique étant configurée pour lire et exécuter le programme d'ordinateur à partir de la mémoire afin de mettre en œuvre le procédé selon l'une quelconque des revendications 1 à 8.

15. Support de stockage lisible par ordinateur sur lequel sont stockées des instructions qui, lorsqu'elles sont exécutées par un ordinateur, amènent l'ordinateur à exécuter le procédé selon l'une quelconque des revendications 1 à 8.
